# EUROPÄISCHE PATENTSCHRIFT

(11) **EP 2 670 041 B1**
(45) Veröffentlichungstag und Bekanntmachung des Hinweises auf die Patenterteilung: **31.12.2014**
(21) Anmeldenummer: 12170485.2
(22) Anmeldetag: 01.06.2012
(51) Int. Cl.: H02M 7/48, H02J 3/26

(54) **Stromversorgungsanordnung mit einem Wechselrichter zur Erzeugung von N-Phasenwechselstrom**
Power supply assembly with an inverter for creating N-phase alternating current
Agencement d'alimentation électrique avec un onduleur pour la génération de courant alternatif de phase N

(43) Veröffentlichungstag der Anmeldung: 04.12.2013
(73) Patentinhaber: AEG Power Solutions GmbH, 59581 Warstein-Belecke (DE)
(72) Erfinder: Averberg, Dr. Ing. Andreas, 53115 Bonn (DE)
(74) Vertreter: Graefe, Jörg

(56) Entgegenhaltungen:
- EP-A1- 2 346 150
- DE-A1- 1 509 941
- DE-B- 1 204 321
- US-A- 2 758 144

## Beschreibung

Die vorliegende Erfindung betrifft eine Stromversorgungsanordnung mit einem Wechselrichter zur Erzeugung von N-Phasenwechselstrom und wenigstens einem N-Phasenwechselstromtransformator mit Primärwicklungen und Sekundärwicklungen, wobei die Primärwicklungen im Polygon geschaltet sind und im Leerlauf des Transformators ein Summenvektor der an den N Sekundärwicklungen anliegenden Spannungen zu Null wird.

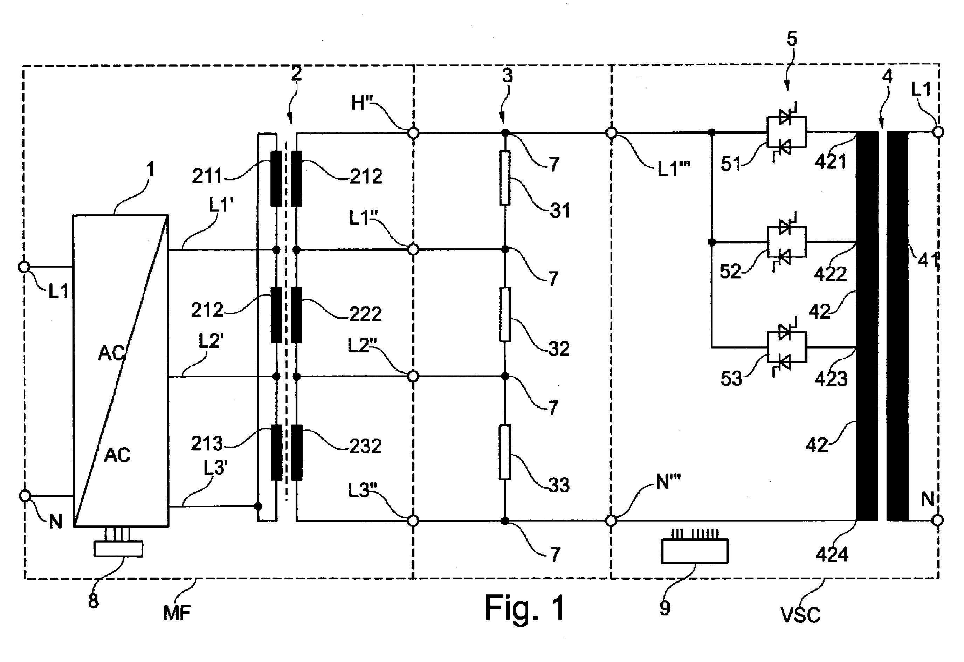

Aus der unveröffentlichten europäischen Patentanmeldung mit der Anmeldenummer 11 174 546.9 ist eine solche Stromversorgungsanordnung bekannt (siehe Fig. 1 , die aus der Anmeldung 11 174 546.9 entnommen ist). Aus der gleichen Anmeldung 11 174 546.9 ist es bekannt, diese erste Stromversorgungsanordnung zur Versorgung von Siliciumstäben zur Herstellung von Polysilicium nach dem Siemensverfahren einzusetzen. Die in der genannten Anmeldung 11 174 546.9 dargestellte erste Stromversorgungsanordnung hat drei Ausgänge, an denen um 120° zueinander verschobene Spannungen zur Verfügung gestellt werden. Diese Spannungen treiben mittelfrequente Ströme mit einer Frequenz zwischen 1 und 1000 kHz in die Siliziumstäbe. Die Spannungen werden durch einen Dreiphasenwechselstromtransformator bereitgestellt, der drei Primärwicklungen und drei Sekundärwicklungen aufweist. Die Primärwicklungen sind im Dreieck geschaltet. Im Leerlauf des Transformators wird ein Summenvektor der an den drei Sekundärwicklungen anliegenden Spannungen zu Null.

Die drei Sekundärwicklungen sind in Reihe geschaltet und liegen parallel zu drei Ausgängen der Stromversorgungsanordnung. An den Ausgängen sind als Lasten Siliciumstäbe angeschlossen, durch die die Stromversorgungsanordung einen Strom treibt.

Neben der Stromversorgung durch die ersten Stromversorgungsanordnungen können die Siliziumstäbe, wie es in der genannten Anmeldung 11 174 546.9 beschrieben ist, gleichzeitig zur Versorgung mit den ersten Stromversorgungsanordnungen von einer zweiten Stromversorgungsanordnung versorgt werden. An dieser zweiten Stromversorgungsanordnung sind die Siliciumstäbe in Reihe geschaltet angeschlossen. Die Stromversorgung erfolgt mit einem Strom mit einer Frequenz von etwa 50 Hz.

In der Anmeldung 11 174 546.9 ist beschrieben, dass die zweite Stromversorgungsanordnung dadurch von den ersten Stromversorgungsanordnungen entkoppelt ist, dass die Spannung über die Reihe geschalteten Ausgänge der ersten Stromversorgungsanordnungen gleich Null ist.

Als Stand der Technik sind US 2758144, DE 1204321, EP 2346150 und DE 1509941 auch bekannt.

In der Praxis können allerdings dann Probleme auftauchen, wenn die Lasten an den Ausgängen einer ersten Stromversorgungsanordnung nicht gleich groß sind. Insbesondere wenn die Induktivität der einen Last größer ist als die Induktivität der anderen Last, können sich zum Teil recht erhebliche Unterschiede in den Beträgen der an den Ausgängen der ersten Stromversorgungsanordnungen zur Verfügung gestellten Spannungen ergeben. Dieses führte dazu, dass diese Summe der Spannungen über den Ausgängen der ersten Stromversorgungsanordnung nicht mehr 0 V beträgt. Stattdessen werden Beträge von mehreren 100 V erreicht. Die Spannung, die erreicht wird, kann dabei von der Frequenz abhängen, mit welcher die erste Stromversorgungsanordnung betrieben wird.

Diese ungleichmäßige Belastung der ersten Stromversorgungsanordnung und die sich daraus ergebende Spannung über den in Reihe geschalteten Ausgängen der ersten Stromversorgungsanordnung kann dazu führen, dass die zweite Stromversorgungsanordnung beschädigt oder zerstört wird.

Der Erfindung liegt daher die Aufgabe zu Grunde, eine erste Stromversorgungsanordnung so fortzubilden, dass Unterschiede zwischen den Beträgen der Spannungen an den Ausgängen einer eingangs genannten ersten Stromversorgungsanordnung so weit wie möglich vermieden werden.

Diese Aufgabe wird erfindungsgemäß dadurch gelöst, dass jeder Eckpunkt des durch die Primärwicklungen gebildeten Polygons über je einen Kondensator mit einem Außenleiteranschluss des Wechselrichters verbunden ist.

Die die Eckpunkte des Polygons mit den Außenleiteranschlüssen verbindenden Kondensatoren sind im Betrieb der Stromversorgungsanordnung mittelbar, d.h. unter Zwischenschaltung des Transformators, im Stromkreis zweier Lasten angeordnet. Dadurch können die Kondensatoren für einen Ausgleich des betragsmäßigen Unterschiedes zwischen den Spannungen an den Ausgängen der Stromversorgungsanordnung sorgen. Die Kondensatoren können eine Kapazität von 4 bis 6 µF, insbesondere von 4,5 µF haben. Die Kondensatoren auf der Primärseite können eine andere Kapazität und andere Spannungsbelastungswerte auf als die Kondensatoren auf der Sekundärseite aufweisen. Typische Kapazitätswerte für Kondensatoren auf der Sekundärseite können 2uF bis 10uF betragen.

Die Ausgänge der Stromversorgungsanordnung sind vorzugsweise parallel zu den Sekundärwicklungen angeordnet.

Ebenso vorteilhaft ist es möglich, dass die Ausgänge der Stromversorgungsanordnung parallel zu Reihenschaltungen aus je einer der Sekundärwicklungen und einem weiteren Kondensator angeordnet sind. Durch die weiteren Kondensatoren kann die erfindungsgemäße Stromversorgungsanordnung, nachfolgend auch als erste Stromversorgungsanordnung bezeichnet, von einer zweiten Stromversorgungsanordnung entkoppelt werden, die parallel zu einer Reihenschaltung der Ausgänge der ersten Stromversorgungsanordnung vorgesehen ist. Diese weiteren Kondensatoren bilden zusammen mit weiteren Bauelementen Hochpässe, welche verhindern, dass von der zweiten Stromversorgungsanordnung getriebener im Vergleich zu den Ausgangsströmen der ersten Stromversorgungsanordnung niederfrequente Strom in die ersten Stromversorgungsanordnungen hinein fließt und diese beschädigt oder zerstört.

Auch bei einer solchen Entkopplung der ersten Stromversorgungsanordnung von der zweiten Stromversorgungsanordnung kann bei ungleicher Belastung die Spannung über alle Ausgänge der ersten Stromversorgungsanordnung reduziert werden. Die Reduzierung ist jedoch dann nicht so deutlich wie im Falle des Verzichts auf diese Kondensatoren an den Außenleiteranschlüssen.

Die Aufgabe kann erfindungsgemäß ebenso dadurch gelöst werden, dass die Spannung über wenigstens N-1 Sekundärwicklungen diskret oder kontinuierlich einstellbar ist. Eine diskrete Einstellbarkeit der Spannung kann dadurch erreicht werden, dass die Sekundärwicklungen mehrere Anzapfungen haben. Ist die Spannung über N-1 Sekundärwicklungen einstellbar, kann sie so verändert werden, dass die Spannungen über den an die erfindungsgemäße Stromversorgungsanordnung angeschlossenen Lasten effektiv gleich ist.

Eine weitere erfindungsgemäße Lösung besteht darin, dass von den Kondensatoren in Reihe zu den Sekundärwicklungen zumindest N-1 eine einstellbare Kapazität haben. Auch mit solchen einstellbaren Kondensatoren könnte erreicht werden, dass die Spannungen über den an die erfindungsgemäße Stromversorgungsanordnung angeschlossenen Lasten effektiv gleich ist.

Der Wechselrichter kann eine Brückenschaltung mit Leistungstransistoren sein.

Die Stromversorgungseinrichtung kann einen Frequenzumrichter umfassen und der Wechselrichter kann Teil des Frequenzumrichters sein. Neben dem Wechselrichter kann der Frequenzumrichter einen Gleichrichter und einen Gleichspannungszwischenkreis umfassen.

Der Frequenzumrichter kann alternativ auch ein Direktumrichter sein. Der Wechselrichter im Sinne dieser Anmeldung ist dann integraler Bestandteil des Direktumrichters.

Die erfindungsgemäße Stromversorgungsanordung kann Teil eines Reaktors zur Herstellung von Polysilicium nach dem Siemensverfahren sein. Die erfindungsgemäße Stromversorgungsanordnung kann eine erste Stromversorgungsanordnung zur Versorgung von Siliciumstäben oder -dünnstäben mit Wechselstrom zur induktiven Erhitzung sein. Die Siliciumstäbe oder -dünnstäbe können in einem Reaktorbehälter angeordnet werden. In dem Reaktorbehälter sind Halterungen vorgesehen, mit welchen die Siliziumstäbe oder Siliziumdünnstäbe gehalten werden. Die Halterungen sind zugleich elektrische Anschlüsse, mit welchen die Siliciumstäbe oder Siliciumdünnstäbe in den Lastkreis eingebunden werden.

Der Reaktor kann eine zweite Stromversorgungsanordnung zur Versorgung der Siliciumstäbe oder -dünnstäbe mit Wechselstrom zur induktiven Erhitzung aufweisen. Diese zweite Stromversorgungsanordnung kann einen Transformator mit mehreren sekundärseitigen Anzapfungen und daran angeschlossenen Leistungsstellern aufweisen, die in Spannungsfolgesteuerung betrieben werden und mit einem Außenleiteranschluss eines Ausgangs der zweiten Stromversorgungsanordnung verbunden werden, wie es zum Beispiel auch in der Fig. 1 offenbart ist. Eine Frequenz des von der ersten Stromversorgungsanordnung erzeugbaren Wechselstroms beträgt zwischen 1 bis 1000 kHz und eine Frequenz des von der zweiten Stromversorgungsanordnung erzeugbaren Wechselstroms beträgt 1 bis 100 Hz.

Weitere Merkmale der Erfindung werden anhand der nachfolgenden Beschreibung bevorzugter Ausführungsbeispiele unter Bezugnahme auf die beiliegenden Abbildungen deutlich. Darin zeigen
- Fig. 1: ein Schaltbild einer Anordnung gemäß dem Stand der Technik aus einer ersten Stromversorgungsanordnung und einer zweiten Stromversorgungsanordnung,
- Fig. 2: ein Schaltbild einer ersten erfindungsgemäßen Stromversorgungsanordnung und
- Fig. 3: ein Schaltbild einer zweiten erfindungsgemäßen Stromversorgungsanordnung.

Die in Figur 1 dargestellte erfindungsgemäße Anordnung umfasst eine erste Stromversorgungsanordnung VSC und eine zweite Stromversorgungsanordnung MF, die gemeinsam zur Versorgung von an die Anordnung angeschlossenen Lasten mit elektrischer Energie vorgesehen sind. Bei den Lasten handelt es sich um Siliciumstäbe 3, die in einem Reaktor zur Herstellung von Polysilicium durch Dampfabscheidung nach dem Siemensverfahren angebracht sind.

In einem Reaktorbehälter des Reaktors sind Halterungen 7 angebracht, welche die Siliciumstäbe 3 einerseits halten und andererseits einen elektrischen Kontakt zwischen den Siliciumstäben 3 und elektrischen Anschlüssen des Reaktors herstellen.

Die erste Stromversorgungsanordnung MF hat einen Eingang, der an einen Außenleiter L 1 und einen Neutralleiter N des einen Einphasenwechselstromsystems angeschlossen ist, wie eine zweite Stromversorgungsanordnung VSC. Die erste Stromversorgungsanordnung MF weist einen AC-AC-Umrichter 1 auf, der an den Eingang der zweiten Stromversorgungsanordnung MF angeschlossen ist.

Bei dem AC-AC-Umrichter 1 kann es sich um einen Matrixkonverter handeln, mit dem der Einphasenwechselstrom am Eingang des AC-AC-Umrichters 1 mit einer Frequenz von 50 bis 60 Hz in einen Dreiphasenwechselstrom mit einer Frequenz von 20 bis 200 MHz umgewandelt wird. Der AC-AC-Umrichter 1 ist somit zugleich eine Schaltung zum Umwandeln des Eingangstroms in die Dreiphasenwechselströme und ein Frequenzumrichter. Am Ausgang des AC-AC-Umrichters 1 werden über drei Außenleiter L1', L2', L3' die Dreiphasenwechselströme zur Verfügung gestellt.

Der Ausgang des AC-AC-Umrichters 1 ist mit einem Dreiphasenwechselstromtransformator 2 verbunden, dessen Primärwicklungen 211, 212, 213 im Dreieck geschaltet sind. Die Sekundärwicklungen 212, 222, 232 sind mit Anschlüssen H", L1", L2", L3" verbunden, die paarweise Ausgänge der zweiten Stromversorgungsanordnungen MF bilden. An diese Ausgänge sind die Siliciumstäbe 3 angeschlossen, wobei ein erster Siliciumstab 31 mit den Anschlüssen H", L1" verbunden ist, die einen ersten Ausgang bilden, ein zweiter Siliciumstab 32 mit den Anschlüssen L1", L2" verbunden ist, die einen zweiten Ausgang bilden und ein dritter Siliciumstab 33 mit den Anschlüssen L2", L3" verbunden ist, die einen dritten Ausgang der zweiten Stromversorgungsanordnung MF bilden. Aufgrund des Phasenwinkels von 120° zwischen den Außenleitern stellt es sich so ein, dass zwischen dem H" und dem Anschluss L3" bei symmetrischer Belastung durch die Siliciumstäbe 31, 32, 33 keine Spannung abfällt.

Der AC-AC-Umrichter 1 wird von einer Steuerung 8 gesteuert, was nicht detailliert dargestellt ist.

Im Grunde genommen könnten die Anschlüsse H" und L3" ohne Auswirkungen auf die zweite Stromversorgungsanordnung MF verbunden werden. Die Sekundärwicklungen 31, 32, 33 wären dann im Dreieck geschaltet. Eine Verbindung zwischen diesen beiden Anschlüssen H" und L 3" wird jedoch nicht hergestellt, da diese auch den Außenleiteranschluss L 1''' und den Neutralleiteranschluss N''' der zweiten Stromversorgungsanordnung VSC kurzschlösse. Dieses ist jedoch nicht erwünscht.

Da zwischen den Anschlüssen H" und L3" der zweiten Stromversorgungsanordnung MF keine Spannung abfällt, und so auch zwischen den Anschlüssen L1"', N''' des Ausgangs der zweiten Stromversorgungsanordnung VSC keine von der ersten Stromversorgungsanordnung MF bereitgestellte Spannung abfällt, kann die zweite Stromversorgungsanordnung MF bei symmetrischer Belastung durch die Siliciumstäbe 31,32, 33 keinen Strom in die erste Stromversorgungsanordnung VSC treiben.

Die zweite Stromversorgungsanordnung VSC hat einen Eingang, der an einen Außenleiter L1 und einen Neutralleiter N eines Einphasenwechselstromsystems angeschlossen ist. Die zweite Stromversorgungsanordnung VSC weist einen Einphasenwechselstromtransformator 4 auf, dessen Primärwicklung 41 mit dem Eingang der zweiten Stromversorgungsanordnung VSC verbunden ist. Eine Sekundärwicklung 42 des Transformators 4 weist vier Anzapfungen 421, 422, 423, 424 auf, von denen drei Anzapfungen 421, 422, 423 über Leistungssteller 51, 52, 53 mit einem Außenleiteranschluss L1''' eines Ausgangs der zweiten Stromversorgungsanordnung VSC verbunden sind. Die vierte Anzapfung 424 ist dagegen mit einem Neutralleiteranschluss N''' des Ausgangs der zweiten Stromversorgungsanordnung VSC verbunden.

Die vierte Anzapfung 424 ist an einem Ende der Sekundärwicklung 42 vorgesehen.

Die Leistungssteller 51, 52, 53 sind Thyristor-Leistungssteller, die durch zwei antiparallel geschaltete Thyristoren gebildet werden. Die Leistungssteller 51, 52, 53 werden in einer Spannungsfolgesteuerung betrieben.

Die Spannungsfolgesteuerung wird durch eine Steuerung 9 realisiert, die mit den Thyristoren der Leistungssteller 51, 52, 53 und weiteren zu steuernden Bauelementen und/oder Sensoren zur Erfassung von Strom, Spannung und anderem verbunden sind, was nicht näher dargestellt ist.

Um Rückwirkungen der zweiten Stromversorgungsanordnung VSC auf die erste Stromversorgungsanordnung MF zu verhindern, können in den Ausgängen der erste Stromversorgungsanordnung MF Hochpassfilter eingebaut werden, die von der Ausgangsspannung der ersten Spannungsversorgungsanordnung VSC nicht passiert werden können.

Die in der Figur 1 dargestellte Anordnung, insbesondere die erste Stromversorgungsanordnung MF kann erweitert werden, um an mehr Ausgängen mehr Siliciumstäbe anschließen zu können. Dazu kann statt eines AC-AC-Umrichters mit einem Ausgang für ein Dreiphasenwechselstromsystem ein AC-AC-Umrichter verwendet werden, der einen Ausgang für ein Mehrphasenwechselstromsystem mit mehr als drei Phasen zur Verfügung stellt, beispielsweise für ein Vier-, Fünf- oder Sechsphasenwechselstromsystem.

Durch Verwendung von zwei Dreiphasenwechselstromtransformatoren 2, deren Primärwicklungen paarweise parallelgeschaltet sind und deren Sekundärwicklungen in Reihe geschaltet sind, ließe sich die erste Stromversorgungsanordnung ebenfalls erweitern.

Die erste Stromversorgungsanordnung MF stellt an ihrem Ausgang L1", L2", L3", H" drei um 120° gegeneinander verschobenen Spannungen zur Verfügung, die im Leerlauf und bei symmetrischer Belastung der des Ausgangs L1", L2", L3", H" einen gleichen Betrag haben. Die Spannung zwischen den Anschlüssen L3", H" beträgt dann 0 V.

Durch eine unsymmetrische Belastung der Anschlüsse des Ausgangs L1", L2", L3", H" kann es sich ergeben, dass die Spannungen effektiv an dem Anschluss des Ausgangs L1", L2", L3", H" unterschiedlich groß sind. Die Spannung zwischen den Anschlüssen L3", H" ist dann nicht 0 V. Die Abweichung kann je nach Frequenz der Wechselspannungen an den Ausgängen und je nach Art der Belastung in einer Größenordnung liegen, die für eine Einbindung der ersten Stromversorgungsanordnung MF in eine größere Anlage problematisch ist. Insbesondere bei unterschiedlicher induktiver Belastung können im Betrieb der ersten Stromversorgungsanordnung die Wechselspannungen auseinanderlaufen. Besonders im Fall des Betriebs der ersten Stromversorgungsanordnung zur Bereitstellung von Wechselspannungen mit Frequenzen, die nahe der Resonanzfrequenzen der Ausgangsstromkreise liegen, kann es zu hohen Spannungen zwischen den Anschlüssen L3", H" kommen.

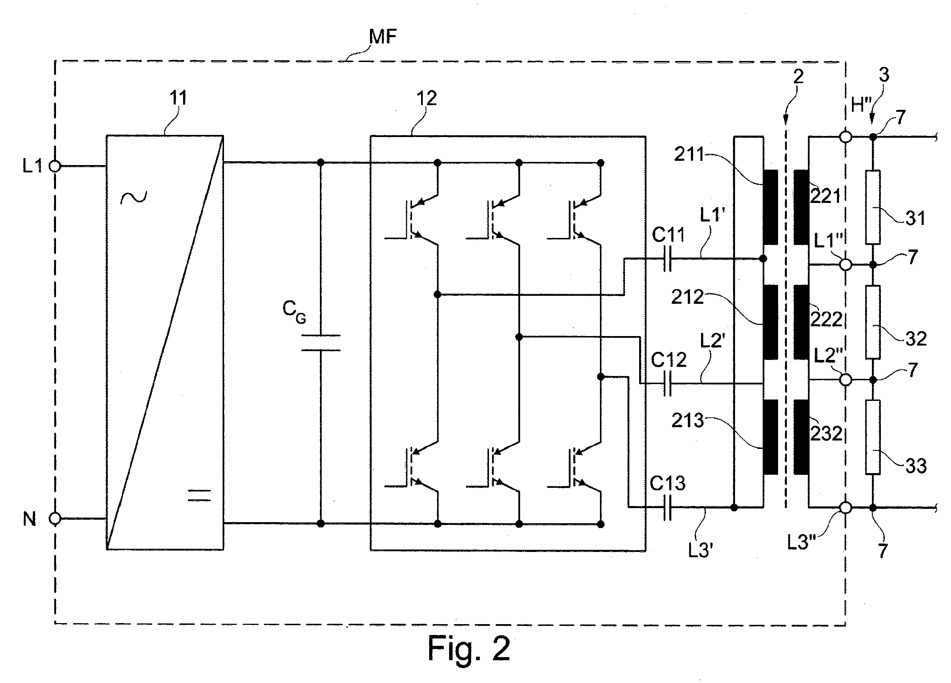

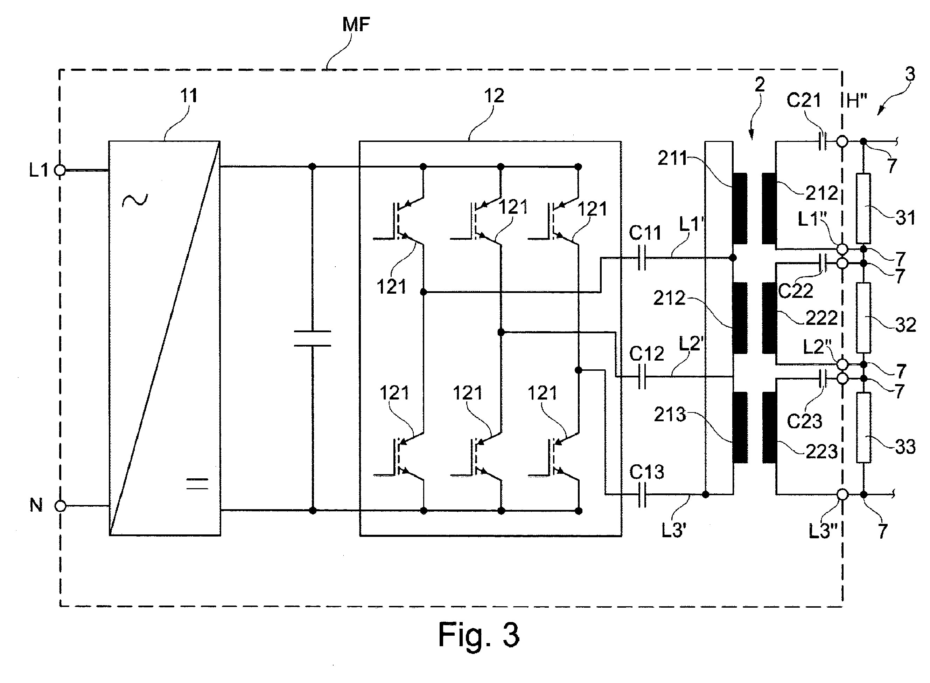

Erfindungsgemäß ist nun vorgesehen zwischen Anschlüssen des Ausgangs des AC-AC-Umrichters 1 und den Eckpunkten der im Dreieck geschalteten Primärwicklungen 211, 212, 213 je einen Kondensator C11, C12, C13 zu schalten. Erste Stromversorgungsanordnungen MF gemäß der Erfindung sind in den Figuren 2 und 3 dargestellt.

Die in Figur 2 und 3 dargestellten ersten Stromversorgungsanordnungen MF entsprechen zu großen Teilen der in Figur 1 dargestellten Stromversorgungsanordnung MF. Funktional gleiche Bauelemente und Komponenten sind daher mit gleichen Bezugszeichen bezeichnet. In der Figur 2 ist die zweite Stromversorgungsanordnung VSC nicht dargestellt. Diese kann aber genauso an die Lasten 31, 32, 33 angeschlossen werden wie bei der in der Figur 1 und der Figur 2 dargestellten Anordnung.

Der AC-AC-Wandler 1 ist in den Figuren 2 und 3 detaillierter dargestellt. Bei dem AC-AC-Wandler 1 handelt es sich um einen Frequenzumrichter 1 mit einem Gleichrichter 1 1 , einen Gleichstromzwischenkreis mit einem Kondensator CG und einem Wechselrichter 12.

Der Gleichrichter 11 ist an einen Außenleiter L1 und einen Neutralleiter N eines Versorgungsnetzes angeschlossen. An den Ausgang des Gleichrichters ist der Kondensator CG angeschlossen, der den Gleichspannungszwischenkreis bildet. An den Gleichspannungszwischenkreis ist der Wechselrichter 12 angeschlossen.

Beim Wechselrichter 12 handelt es sich um eine H-Brücke aus Stromrichterventilen, insbesondere IGBTs 121, wie sie bei Wechselrichtern vielfach verbreitet ist. Anstellte von IGBTs können auch andere steuerbaren Schalter verwendet werden. Punkte zwischen den Stromrichterventilen 121 der Halbbrücken der H-Brücke bilden Anschlüsse eines Ausgangs des Wechselrichters 12. An die Anschlüsse sind die Kondensatoren C11, C12, C13 angeschlossen. Die Kondensatoren C11, C12, C13 sind mit den Eckpunkten L1', L2', L3' der Dreieckschaltung aus den Primärwicklungen 211, 212, 213 des Dreiphasenwechselstromtransformators 2 verbunden. Die sekundärseitige Schaltung des Dreiphasenwechselstromtransformators 2 und der daran angeschlossenen Lasten 31, 32 ,33 unterscheidet sich nicht von der in der Figur 1 dargestellten Schaltung.

Durch die Kondensatoren C11, C12, C13 kann die bei unsymmetrischer Belastung auftretende Spannung zwischen den Anschlüssen L3", H" erheblich gemindert werden.

Durch die Kondensatoren C11, C12, C13 kommt es zu einer primärseitigen Kopplung der Ausgangsstromkreise, was zu einer Reduzierung der Spannung zwischen den Anschlüssen L3", H" führt. Die Spannungen an den Anschlüssen L3", H" werden gegenüber den anhand Figur 1 beschriebenen Fällen unsymmetrischer Belastung angeglichen. Die Spannungen können um bis ca. 100% reduziert werden.

Eine fast 80%-ige Reduzierung der Spannung zwischen den Außenleitern im Fall einer unsymmetrischen, insbesondere einer unsymmetrischen ohmsch-induktiven Belastung des Ausgangs der ersten Stromversorgungsanordnung MF kann erreicht werden, wenn Kondensatoren C21, C22 und C23 in die Verbindungen zwischen den Sekundärwicklungen 212, 222, 232 des Transformators 2 und den Anschlüssen L1", L2", L3",H" eingesetzt sind, wie es in Figur 3 für die zweite erfindungsgemäße Schaltungsanordnung dargestellt ist, welche im Übrigen der ersten erfindungsgemäßen Schaltungsanordnung gemäß Figur 2 entspricht. Diese zusätzlichen Kondensatoren C21, C22 und C23 verhindern zwar die vollständige Symmetrierung der Ausgangsspannungen, dafür kann aber eine Entkopplung der ersten Stromversorgungsanordnung MF von der ersten Stromversorgungsanordnung VSC erreicht werden.

## Patentansprüche

1. Stromversorgungsanordnung (MF) mit einem Wechselrichter (12) zur Erzeugung von N-Phasenwechselstrom und wenigstens einem N-Phasenwechselstromtransformator (2) mit Primärwicklungen (211, 212, 213) und Sekundärwicklungen (221, 222, 223), wobei die Primärwicklungen (211, 212, 213) im Polygon geschaltet sind und im Leerlauf des Transformators (2) ein Summenvektor der an den N Sekundärwicklungen (221, 222, 223) anliegenden Spannungen zu Null wird,
**dadurch gekennzeichnet,**
- **dass** jeder Eckpunkt des durch die Primärwicklungen (211, 212, 213) gebildeten Polygons über je einen Kondensator (C11, C12, C13) mit einem Außenleiteranschluss des Wechselrichters verbunden ist,
- **dass** die Spannung über wenigstens N-1 Sekundärwicklungen (221, 222, 223) diskret oder kontinuierlich einstellbar ist und/oder
- in Reihe zu den Sekundärwicklungen (221, 222, 223) Kondensatoren vorgesehen sind, von denen wenigstens N-1 eine einstellbare Kapazität haben.

2. Stromversorgungsanordnung (MF) nach Anspruch 1, **dadurch gekennzeichnet, dass** die Ausgänge der Stromversorgungsanordnung (MF) parallel zu den Sekundärwicklungen (221, 222, 223) angeordnet sind.

3. Stromversorgungsanordnung (MF) nach Anspruch 2, **dadurch gekennzeichnet, dass** die Ausgänge der Stromversorgungsanordnung (MF) parallel zu Reihenschaltungen aus je einer der Sekundärwicklungen (221, 222, 223) und je einem Kondensator (C21, C22, C23) angeordnet ist.

4. Stromversorgungsanordnung (MF) nach einem der Ansprüche 1 bis 3, **dadurch gekennzeichnet, dass** der Wechselrichter (12) eine H-Brücke mit Leistungstransistoren (121) ist.

5. Stromversorgungsanordnung (MF) nach einem der Ansprüche 1 bis 4, **dadurch gekennzeichnet, dass** die Stromversorgungsanordnung einen Frequenzumrichter (11, 12, CG) umfasst und dass der Wechselrichter (12) Teil des Frequenzumrichters (1 1 , 12, CG) ist.

6. Reaktor zur Herstellung von Polysilicium nach dem Siemensverfahren mit einer ersten Stromversorgungsanordnung (MF) zur Versorgung von Siliciumstäben oder -dünnstäben, die in einem Reaktorbehälter angeordnet werden können, mit Wechselstrom zur induktiven Erhitzung, **dadurch gekennzeichnet, dass** die erste Stromversorgungsanordnung (MF) eine Stromversorgungsanordnung nach einem der Ansprüche 1 bis 5 ist.

7. Reaktor nach Anspruch 6, **dadurch gekennzeichnet, dass** der Reaktor eine zweite Stromversorgungsanordnung (VSC) zur Versorgung der Siliciumstäbe oder -dünnstäbe mit Wechselstrom zur induktiven Erhitzung aufweist, wobei eine Frequenz des von der ersten Stromversorgungsanordnung erzeugbaren Wechselstroms 10 bis 100 Hz beträgt und eine Frequenz des von der zweiten Stromversorgungsanordnung erzeugbaren Wechselstroms 10 bis 1000 kHz beträgt.

## Claims

1. Power supply arrangement (MF) comprising an inverter (12) for generating N-phase alternating current and at least one N-phase AC transformer (2) having primary windings (211, 212, 213) and secondary windings (221, 222, 223), wherein the primary windings (211, 212, 213) are polygon-connected and, during no-load operation of the transformer (2), a vector sum of the voltages present at the N secondary windings (221, 222, 223) becomes zero,
**characterized**
- **in that** each corner point of the polygon formed by the primary windings (211, 212, 213) is connected to an outer conductor connection of the inverter via in each case one capacitor (C11, C12, C13),
- **in that** the voltage across at least N-1 secondary windings (221, 222, 223) is adjustable discretely or continuously and/or
- capacitors are provided in series with the secondary windings (221, 222, 223), of which capacitors at least N-1 have an adjustable capacitance.

2. Power supply arrangement (MF) according to Claim 1, **characterized in that** the outputs of the power supply arrangement (MF) are arranged in parallel with the secondary windings (221, 222, 223).

3. Power supply arrangement (MF) according to Claim 2, **characterized in that** the outputs of the power supply arrangement (MF) are arranged in parallel with series circuits comprising in each case one of the secondary windings (221, 222, 223) and in each case one capacitor (C21, C22, C23).

4. Power supply arrangement (MF) according to one of Claims 1 to 3, **characterized in that** the inverter (12) is an H bridge comprising power transistors (121).

5. Power supply arrangement (MF) according to one of Claims 1 to 4, **characterized in that** the power supply arrangement comprises a frequency converter (11, 12, CG), and **in that** the inverter (12) is part of the frequency converter (11, 12, CG).

6. Reactor for producing polysilicon in accordance with the Siemens method comprising a first power supply arrangement (MF) for supplying alternating current to silicon rods or thin silicon rods, which can be arranged in a reactor vessel, for inductive heating, **characterized in that** the first power supply arrangement (MF) is a power supply arrangement according to one of Claims 1 to 5.

7. Reactor according to Claim 6, **characterized in that** the reactor has a second power supply arrangement (VSC) for supplying alternating current to the silicon rods or thin silicon rods for inductive heating, wherein a frequency of the alternating current that can be generated by the first power supply arrangement is 10 to 100 Hz, and a frequency of the alternating current that can be generated by the second power supply arrangement is 10 to 1000 kHz.

## Revendications

1. Système d'alimentation électrique (MF) comportant un onduleur (12) destiné à générer un courant alternatif à N phases et au moins un transformateur de courant alternatif à N phases (2) comportant des enroulements primaires (211, 212, 213) et des enroulements secondaires (221, 222, 223), dans lequel les enroulements primaires (211, 212, 213) sont connectés en polygone et, lors du fonctionnement à vide du transformateur (2), un vecteur somme des tensions appliquées aux N enroulements secondaires (221, 222, 223) devient nul,
**caractérisé en ce que**
- chaque sommet du polygone formé par les enroulements primaires (211, 212, 213) est connecté par l'intermédiaire d'un condensateur (C11, C12, C13) respectif à un connecteur de conducteur de sortie de l'onduleur,
- la tension aux bornes des au moins N-1 enroulements secondaires (221, 222, 223) peut être ajustée de manière discrète ou continue, et/ou
- il est prévu, en série par rapport aux enroulements secondaires (221, 222, 223), des condensateurs dont au moins N-1 ont une capacité réglable.

2. Dispositif d'alimentation électrique (MF) selon la revendication 1, **caractérisé en ce que** les sorites du dispositif d'alimentation électrique (MF) sont disposées parallèlement aux enroulements secondaires (221, 222, 223).

3. Dispositif d'alimentation électrique (MF) selon la revendication 2, **caractérisé en ce que** les sorties du dispositif d'alimentation électrique (MF) sont disposées parallèlement aux connexions en série chacune constituées de l'un des enroulements secondaires (221, 222, 223) et d'un condensateur (C21, C22, C23).

4. Dispositif d'alimentation électrique (MF) selon l'une quelconque des revendications 1 à 3, **caractérisé en ce que** l'onduleur (12) est un pont en H comportant des transistors de puissance (121).

5. Dispositif d'alimentation électrique (MF) selon l'une quelconque des revendications 1 à 4, **caractérisé en ce que** le dispositif d'alimentation électrique comprend un convertisseur de fréquence (11, 12, CG) et **en ce que** l'onduleur (12) fait partie du convertisseur de fréquence (11, 12, CG).

6. Réacteur destiné à fabriquer du polysilicium conformément au procédé Siemens, comportant un premier dispositif d'alimentation électrique (MF) destiné à alimenter des tiges de silicium ou des tiges minces de silicium pouvant être disposées dans une cuve de réacteur, en courant alternatif pour un chauffage par induction, **caractérisé en ce que** le premier dispositif d'alimentation électrique (MF) est un dispositif d'alimentation électrique selon l'une quelconque des revendications 1 à 5.

7. Réacteur selon la revendication 6, **caractérisé en ce que** le réacteur comporte un second dispositif d'alimentation électrique (VSC) destiné à alimenter les tiges de silicium ou les tiges minces de silicium en courant alternatif pour un chauffage par induction, dans lequel une fréquence du courant alternatif pouvant être généré par le premier dispositif d'alimentation électrique est de 10 à 100 Hz et une fréquence du courant alternatif pouvant être généré par le second dispositif d'alimentation électrique est de 10 à 1000 kHz.
